# DEMANDE DE BREVET EUROPEEN

(11) **EP 4 585 113 A1**
(43) Date de publication de la demande: **16.07.2025**
(21) Numéro de dépôt: 25150863.6
(22) Date de dépôt: 09.01.2025
(51) Int. Cl.: A47J 31/44, A47J 31/60

(54) **DISPOSITIF DE MOUSSAGE DE LAIT ET MACHINE DE DISTRIBUTION DE BOISSON ASSOCIÉE**

(30) Priorité: 10.01.2024 FR 2400231
(71) Demandeur: SEB S.A., 69130 Ecully (FR)
(72) Inventeur: MORIN, Gilles, 69134 ECULLY CEDEX (FR)
(74) Mandataire: SEB Développement

(57) **Abrégé**

Ce dispositif de moussage de lait (28) comporte un élément de mélange (42) comprenant une partie de mélange, un orifice d'entrée d'eau chaude/vapeur et un conduit d'écoulement principal reliant l'orifice d'entrée d'eau chaude/vapeur à la partie de mélange ; une partie de fermeture (96) mobile par rapport à l'élément de mélange (42), et un conduit d'amenée de lait relié au conduit d'écoulement principal. La partie de fermeture (96) comprend au moins une fenêtre de visualisation (97) destinée à être en regard de la partie de mélange lorsque la partie de fermeture (96) est en position de fermeture.

## Description

### Domaine technique

La présente invention se rapporte au domaine des machines de distribution de boisson et notamment des machines à café de préférence automatiques. Plus particulièrement la présente invention concerne le domaine des dispositifs de moussage de lait destinés à coopérer avec des machines de distribution de boisson telles des machines à café. De tels dispositifs de moussage permettent notamment lorsqu'ils sont associés à une machine à café de réaliser des boissons à base de café et de mousse de lait.

### Etat de la technique

Il est connu de WO2005/063093 un dispositif de moussage de lait comportant :
- un élément de mélange comprenant :
   + une partie de mélange ;
   + un orifice d'entrée d'eau chaude/vapeur et un conduit d'écoulement principal reliant l'orifice d'entrée d'eau chaude/vapeur à la partie de mélange ;
- une partie de fermeture mobile par rapport à l'élément de mélange entre une position de fermeture dans laquelle la partie de fermeture ferme la partie de mélange et le conduit d'écoulement principal et une position d'ouverture dans laquelle la partie de mélange et le conduit d'écoulement principal sont ouverts et accessibles pour autoriser un nettoyage de la partie de mélange et du conduit principal ; et
- un conduit d'amenée de lait relié au conduit d'écoulement principal.

La configuration particulière du dispositif de moussage de lait décrit dans le document WO2005/063093, et plus particulièrement de la partie de mélange et de la partie de fermeture, permet un nettoyage du dispositif de moussage de lait.

Cependant, un tel dispositif de moussage reste complexe à utiliser et ne permet pas de garantir une performance de moussage optimisée dans le temps.

### Résumé de l'invention

La présente invention vise à remédier à ces inconvénients.

Le problème technique à la base de l'invention consiste à proposer un dispositif de moussage dont l'utilisation est simplifiée et pour lequel la performance de moussage du lait est améliorée.

A cet effet, l'invention a pour objet un dispositif de moussage de lait destiné à coopérer avec une machine de distribution de boisson, le dispositif de moussage de lait comportant : un élément de mélange comprenant une partie de mélange, un orifice d'entrée d'eau chaude/vapeur et un conduit d'écoulement principal reliant l'orifice d'entrée d'eau chaude/vapeur à la partie de mélange ; une partie de fermeture mobile par rapport à l'élément de mélange entre une position de fermeture dans laquelle la partie de fermeture ferme la partie de mélange et le conduit d'écoulement principal et une position d'ouverture dans laquelle la partie de mélange et le conduit d'écoulement principal sont ouverts et accessibles pour autoriser un nettoyage de la partie de mélange et du conduit d'écoulement principal ; et un conduit d'amenée de lait relié au conduit d'écoulement principal. Conformément à l'invention, la partie de fermeture comprend au moins une fenêtre de visualisation destinée à être en regard de la partie de mélange lorsque la partie de fermeture est en position de fermeture.

Grâce à l'invention, le dispositif de moussage est plus simple d'utilisation car il suffit à l'utilisateur de regarder au travers de la fenêtre de visualisation pour savoir si le dispositif de moussage a déjà été utilisé et s'il faut le nettoyer avant de réaliser une boisson. En outre, l'utilisateur peut vérifier le bon fonctionnement du dispositif de moussage au travers de la fenêtre de visualisation. De plus, il n'est plus nécessaire pour l'utilisateur de dissocier le dispositif de moussage de la machine de distribution de boisson et/ou de déplacer la partie de fermeture en position d'ouverture pour effectuer une telle vérification. Enfin, la performance de moussage est améliorée puisque l'utilisateur visualise simplement que des protéines de lait ont par exemple séchées dans le conduit d'écoulement principal et qu'il est nécessaire de réaliser une opération de nettoyage pour optimiser la performance de moussage.

Selon des aspects avantageux mais non obligatoires de l'invention, un tel dispositif de moussage peut incorporer une ou plusieurs des caractéristiques suivantes, prises dans toute combinaison techniquement admissible.

Selon une caractéristique avantageuse de l'invention, la partie de mélange comprend une ouverture d'entrée de liquide, une ouverture de sortie de liquide et une chambre de mélange s'étendant entre l'ouverture d'entrée de liquide et l'ouverture de sortie de liquide, la chambre de mélange comprenant une extrémité supérieure ouverte et la fenêtre de visualisation étant destinée à être en regard de l'extrémité supérieure ouverte lorsque la partie de fermeture est en position de fermeture.

Un tel agencement permet à l'utilisateur de visualiser la chambre de mélange et ainsi d'identifier si le dispositif de moussage a déjà été utilisé et doit être nettoyé, mais également de visualiser le bon fonctionnement du dispositif de moussage lors de son fonctionnement en observant la texture de la mousse de lait dans la chambre de mélange au travers de la fenêtre de visualisation.

Selon une caractéristique avantageuse de l'invention, l'extrémité supérieure ouverte forme une ouverture d'accès à la chambre de mélange, et la partie de fermeture ferme l'ouverture d'accès lorsque la partie de fermeture est en position de fermeture.

Un tel agencement permet de faciliter le nettoyage de la chambre de mélange tout en assurant la fermeture de la chambre de mélange via la partie de fermeture lors de l'utilisation du dispositif de moussage.

Selon une caractéristique avantageuse de l'invention, la chambre de mélange est de section sensiblement circulaire perpendiculairement à un axe vertical, et le conduit d'écoulement principal débouche sensiblement tangentiellement dans la chambre de mélange de sorte que la chambre de mélange soit de type cyclonique.

Un tel agencement permet de favoriser le mélange et l'homogénéisation de la mousse de lait dans la chambre de mélange.

Selon une caractéristique avantageuse de l'invention, la chambre de mélange s'étend suivant un axe vertical et l'ouverture d'entrée de liquide débouche dans une partie supérieure de la chambre de mélange, et par exemple dans un point haut de la chambre de mélange et l'ouverture de sortie de liquide est située dans une partie inférieure de la chambre de mélange, et est par exemple située en un point bas de la chambre de mélange.

Un tel agencement permet de favoriser la circulation de liquide dans la chambre de mélange et offre des bonnes performances en termes de moussage de lait et de débit de mousse de lait.

Selon une caractéristique avantageuse de l'invention, le dispositif de moussage de lait comprend un joint d'étanchéité agencé à une zone de jonction entre l'élément de mélange et la partie de fermeture et s'étendant sur la périphérie de la partie de mélange et du conduit d'écoulement principal, la partie de fermeture étant propre à assurer un appui sur le joint d'étanchéité lorsque la partie de fermeture est en position de fermeture.

Un tel agencement permet de garantir l'étanchéité entre l'élément de mélange et la partie de fermeture et ainsi d'assurer des performances de moussage optimisées.

Selon une caractéristique avantageuse de l'invention, la partie de fermeture comprend un conduit d'amenée d'air propre à être relié au conduit d'écoulement principal lorsque la partie de fermeture est en position de fermeture, et un dispositif de réglage de débit d'air configuré pour régler un débit d'air s'écoulant dans le conduit d'amenée d'air.

Un tel agencement permet un réglage de la texture de la mousse et notamment de la quantité d'air mélangée au lait.

Selon une caractéristique avantageuse de l'invention, la partie de fermeture forme un couvercle sensiblement plan propre à recouvrir la partie de mélange et le conduit d'écoulement principal.

Un tel agencement permet d'avoir un dispositif de moussage de structure et d'encombrement optimisés.

Selon une caractéristique avantageuse de l'invention, le dispositif de moussage comprend un récipient de lait définissant une ouverture supérieure de remplissage et l'élément de mélange et la partie de fermeture sont propres à recouvrir l'ouverture supérieure de remplissage.

Un tel agencement permet de regroupe les fonctions stockage et moussage du lait dans un pot à lait.

Selon une caractéristique avantageuse de l'invention, le dispositif de moussage de lait est propre à être intégré dans une tête de distribution de boisson d'une machine de distribution de boisson comprenant une sortie de distribution d'eau chaude/vapeur, l'orifice d'entrée d'eau chaude/vapeur étant propre à être relié fluidiquement à la sortie de distribution d'eau chaude/vapeur lorsque le dispositif de moussage est reçu dans la tête de distribution de boisson.

Un tel agencement permet de simplifier l'intégration du dispositif de moussage de lait dans une tête de distribution de boisson et notamment dans une machine de distribution de boisson.

Selon une caractéristique avantageuse de l'invention, la partie de fermeture est configurée pour être articulée avec l'élément de mélange via une charnière définissant un axe de rotation sensiblement horizontal.

Un tel agencement permet de simplifier la manipulation du dispositif de moussage de lait et notamment de la partie de fermeture. En effet, l'articulation de la partie de fermeture sur l'élément de mélange permet de maintenir la partie de fermeture liée à l'élément de mélange quelle que soit sa position et de facilement déplacer la partie de fermeture en position ouverte ou fermée suivant si l'utilisateur souhaite nettoyer ou utiliser le dispositif de moussage. De plus l'association du dispositif de moussage avec une machine de distribution de boisson est aisée. Enfin la performance de moussage est améliorée car le nettoyage est facilité et car la partie de fermeture permet d'assurer une bonne étanchéité du conduit d'écoulement principal.

Selon une caractéristique avantageuse de l'invention, la fenêtre de visualisation est formée par une portion de la partie de fermeture réalisée en un matériau transparent.

Un tel agencement permet de simplifier la réalisation de la fenêtre de visualisation.

Selon une caractéristique avantageuse de l'invention, l'ouverture d'accès est disposée sur une face supérieure de l'élément de mélange et l'ouverture de sortie sur une face inférieure de l'élément de mélange et avantageusement le conduit d'écoulement principal est également disposé sur la face supérieure de l'élément de mélange.

Selon une caractéristique avantageuse de l'invention, le conduit d'écoulement principal s'étend selon un plan sensiblement horizontal et comprend sur au moins 50% de sa longueur, de préférence sur au moins 70% de sa longueur une ouverture supérieure également appelée extrémité supérieure ouverte, propre à être fermée lorsque la partie de fermeture est en position de fermeture.

Selon une caractéristique avantageuse de l'invention, la partie de fermeture est configurée pour recouvrir une face supérieure d'une paroi supérieure de l'élément de mélange, la partie de fermeture formant un couvercle sensiblement plan propre à recouvrir la face supérieure de la paroi supérieure et notamment la partie de mélange et le conduit d'écoulement principal.

L'invention a également pour objet une machine de distribution de boisson comprenant une sortie de distribution d'eau chaude/vapeur et un dispositif de moussage de lait. Conformément à l'invention, le dispositif de moussage de lait est tel que décrit ci-dessus, et l'orifice d'entrée d'eau chaude/vapeur est propre à être relié fluidiquement à la sortie de distribution d'eau chaude/vapeur.

Un tel agencement permet d'obtenir à partir de la machine de distribution de boisson, des boissons à base de lait moussé dont la texture et la qualité sont optimisées.

Selon une caractéristique avantageuse de l'invention la machine de distribution de boisson comprend une tête de distribution de boisson comprenant la sortie de distribution d'eau chaude/vapeur et un logement de réception du dispositif de moussage de lait, et la tête de distribution de boisson comprend une façade supérieure munie d'une zone de visualisation de la fenêtre de visualisation lorsque le dispositif de moussage de lait est positionné dans le logement de réception.

Un tel agencement permet d'améliorer la sécurité de l'utilisateur et de faciliter l'intégration du dispositif de moussage dans la machine de distribution de boisson. Cela permet notamment de positionner une sortie de distribution de lait du dispositif de moussage à proximité de sorties de distribution de boisson par exemple de café de la machine de distribution de boisson. En outre cette agencement permet de visualiser l'intérieur de la partie de mélange au travers de la zone de visualisation et de la fenêtre de visualisation.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue de face d'une machine de distribution de boisson comprenant une tête de distribution de boisson recevant un dispositif de moussage de lait conforme à un premier mode de réalisation de l'invention.
La figure 2 est une vue en perspective de la tête de distribution de boisson de la figure 1 sur laquelle un dispositif d'appui/maintien associé à la tête de distribution de boisson est en position fermée;
La figure 3 est une vue en perspective de la tête de distribution de boisson de la figure 1 sur laquelle un dispositif d'appui/maintien associé à la tête de distribution de boisson est en position ouverte ;
La figure 4 est une vue de côté en coupe selon le plan de coupe vertical selon la ligne IV-IV de la tête de distribution de boisson de la figure 2 ;
La figure 5 est une vue en perspective du dispositif de moussage de lait des figures 1 à 4 comprenant une partie de fermeture en position de fermeture;
La figure 6 est une vue analogue à la figure 5 sur laquelle la partie de fermeture est en position d'ouverture;
La figure 7 est une vue en perspective d'un dispositif de moussage selon un deuxième mode de réalisation de l'invention dans laquelle une partie de fermeture est en position de fermeture;
La figure 8 est une vue partielle en perspective du dispositif de moussage de la figure 7 dans laquelle la partie de fermeture et un système de maintien de la partie de fermeture sont omis.

Seuls les éléments nécessaires à la compréhension de l'invention ont été représentés. Pour faciliter la lecture des dessins, les mêmes éléments portent les mêmes références d'une figure à l'autre.

### Description détaillée de l'invention

Dans la suite de la description on entend par mousse ou moussage le fait d'obtenir à partir d'un liquide une mousse que ce soit seulement de la mousse de ce liquide (i.e. de la mousse de lait) ou un mélange de ce liquide et de mousse de ce liquide (i.e. un mélange de lait et de mousse de lait).

On notera que dans ce document, les termes « horizontal », « vertical », « inférieur », « supérieur », « haut », « bas », « avant », « arrière », « longitudinal », « transversal », employés pour décrire la machine de distribution de boisson et les éléments associés à celle-ci font référence à la machine de distribution de boisson et aux éléments associés en situation d'usage, lorsque la machine repose à plat sur un plan de travail.

De plus les termes « amont » et « aval » ou « entrée » et « sortie » sont définis en fonction d'un sens de circulation de la boisson ou de la vapeur dans la machine de distribution de boisson et dans le dispositif de moussage de lait.

Les termes « externe » et « interne » de même que les termes « extérieur » et « intérieur » sont définis par rapport à un axe central de la machine de distribution de boisson ou du dispositif de moussage de lait. Ainsi une portion/partie interne/intérieure sera plus proche de l'axe central qu'une portion/partie externe/extérieure.

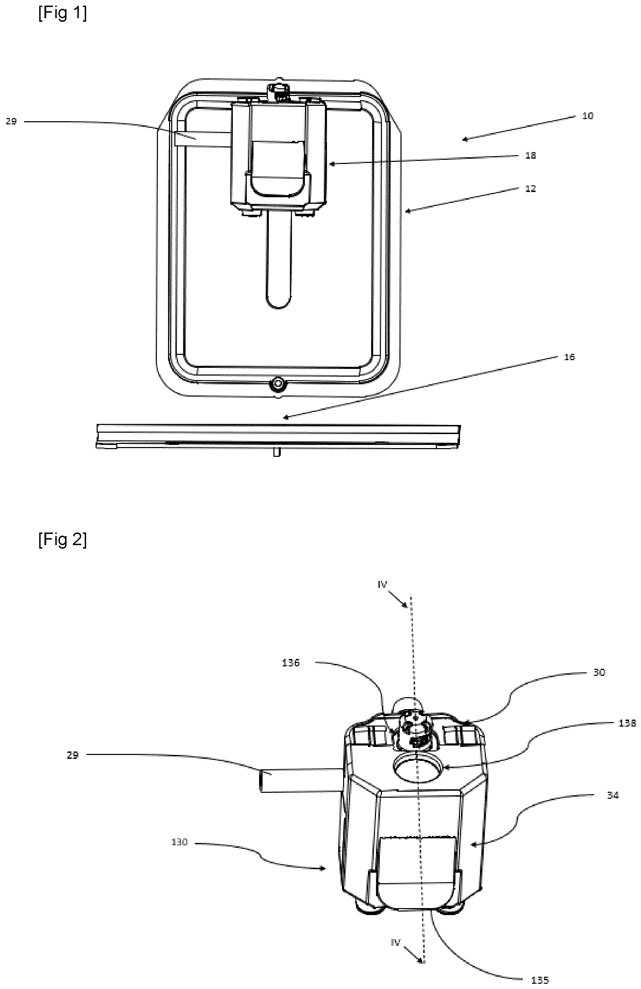

La machine de distribution de boisson représentée à la figure 1 est une machine à café 10. En variante, la machine de distribution de boisson est une machine de distribution d'eau chaude ou de thé.

La machine à café 10 est avantageusement une machine à café automatique.

La machine à café 10 comporte un bâti 12 et une zone de réception 16 d'un contenant ou récipient sur laquelle un contenant/récipient, non représenté, est propre à être disposé.

La machine à café 10 comprend également une tête de distribution de boisson 18.

La machine à café 10 comprend avantageusement une interface homme machine, non visible sur les figures, via laquelle un utilisateur est propre à sélectionner un type de boisson à distribuer et avantageusement à saisir des paramètres de réglage de la machine à café 10.

La machine à café 10 comporte également une unité de préparation de boisson, non représentée, intégrée au bâti 12.

L'unité de préparation comprend un circuit de commande pour gérer la réalisation d'une boisson à partir des instructions données par l'utilisateur. L'unité de préparation comprend également une chaudière produisant de l'eau chaude et/ou de la vapeur et un réservoir formant une réserve en eau froide. Le réservoir permet d'alimenter la chaudière pour produire de l'eau chaude et/ou de la vapeur.

L'unité de préparation comprend également avantageusement, de manière connue et non représentée, un réservoir de grains de café, un moulin à grains automatique et une chambre d'infusion propre à recevoir les grains de café moulus et à être alimentée en eau chaude par la chaudière. La chambre d'infusion est reliée fluidiquement à la tête de distribution 18, de manière à ce que la machine 10 soit propre à distribuer une boisson à base de café via la tête de distribution de boisson 18.

La machine à café 10 comprend également un embout de sortie d'eau chaude/vapeur, non visible sur les figures, propre à être alimenté en eau chaude et/ou vapeur par la chaudière. L'embout de sortie d'eau chaude/vapeur débouche à proximité de la tête de distribution de boisson 18 pour l'alimenter en eau chaude/vapeur.

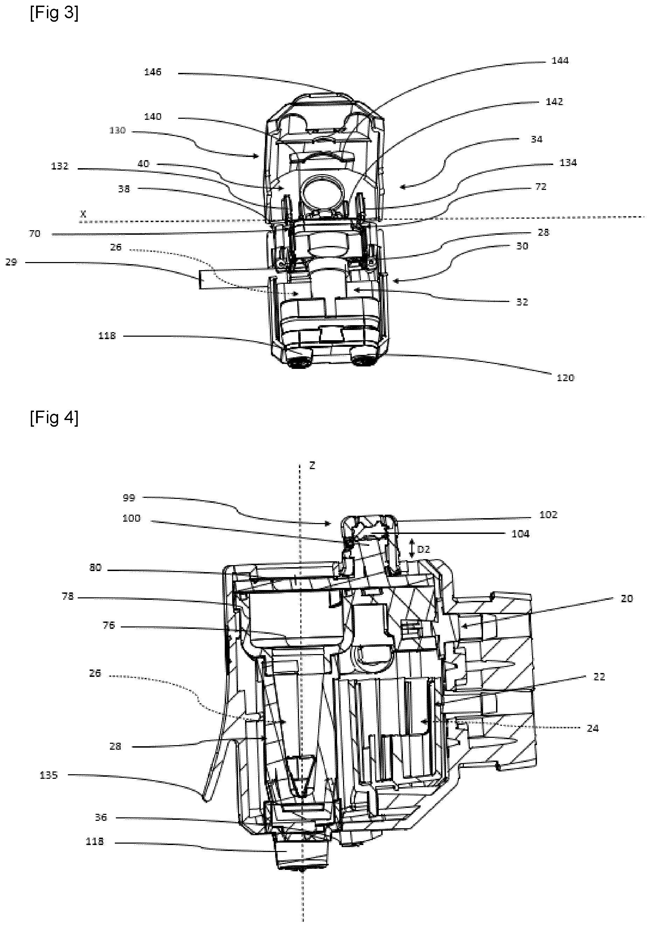

Dans le mode de réalisation des figures 1 à 4, la tête de distribution de boisson 18 comprend une sortie de distribution d'eau chaude/vapeur 20, visible à la figure 4, reliée fluidiquement à l'embout de sortie d'eau chaude/vapeur.

L'embout de sortie d'eau chaude/vapeur est par exemple formé par un tube propre à être connecté à la sortie de distribution d'eau chaude/vapeur 20.

La tête de distribution de boisson 18 comprend également un organe de distribution de boisson 22 propre à être relié fluidiquement à la chambre d'infusion et à distribuer la boisson à base de café.

L'organe de distribution de boisson 22 comprend avantageusement deux sorties de distribution de boisson, dont une seule 36 est visible à la figure 4, de sorte qu'il est propre à délivrer la boisson à base de café dans deux tasses simultanément.

Comme visible à la figure 4, la tête de distribution de boisson 18 comprend une zone 24, de préférence arrière, recevant l'organe de distribution de boisson 22 et une zone, de préférence avant, définissant un logement 26 de réception d'un dispositif de moussage de lait 28.

La tête de distribution de boisson 18 est avantageusement réglable en hauteur.

La tête de distribution de boisson 18 comprend également une entrée d'alimentation 29 en lait du dispositif de moussage 28.

Avantageusement, et comme représenté à la figure 3, l'entrée d'alimentation 29 débouche sur un côté latéral de la tête de distribution de boisson 18. L'entrée d'alimentation 29 est propre à recevoir un tube d'alimentation en lait relié fluidiquement à un récipient de lait de préférence déporté par rapport à la machine 10.

Comme visible aux figures 2 et 3, la tête de distribution de boisson 18 comprend un corps principal 30 définissant le logement 26 de réception du dispositif de moussage 28 et la zone 24 de réception de l'organe de distribution de boisson 22.

Le corps principal 30 comprend une extrémité avant 32 ouverte d'accès au logement de réception 26.

La tête de distribution de boisson 18 comprend également un corps de fermeture 34 de l'extrémité avant 32.

Dans le mode de réalisation représenté, le corps de fermeture 34 est monté pivotant sur le corps principal 30. Le corps de fermeture 34 est propre à être déplacé entre une position ouverte d'accès au logement de réception 26 du dispositif de moussage 28 et une position fermée dans laquelle il vient fermer au moins partiellement le logement de réception 26 notamment l'extrémité avant 32 du corps principal 30.

Le corps de fermeture 34 est articulé en rotation sur le corps principal 30 selon un axe longitudinal X sensiblement horizontal. L'articulation est par exemple située entre une paroi supérieure 38 du corps principal 30 et une paroi supérieure 40 du corps de fermeture 34.

Dans l'exemple des figures 1 à 6, le dispositif de moussage 28 est amovible par rapport à la tête de distribution de boisson 18 et notamment au logement de réception 26. En d'autres termes le dispositif de moussage est propre à être intégré dans la tête de distribution de boisson 18.

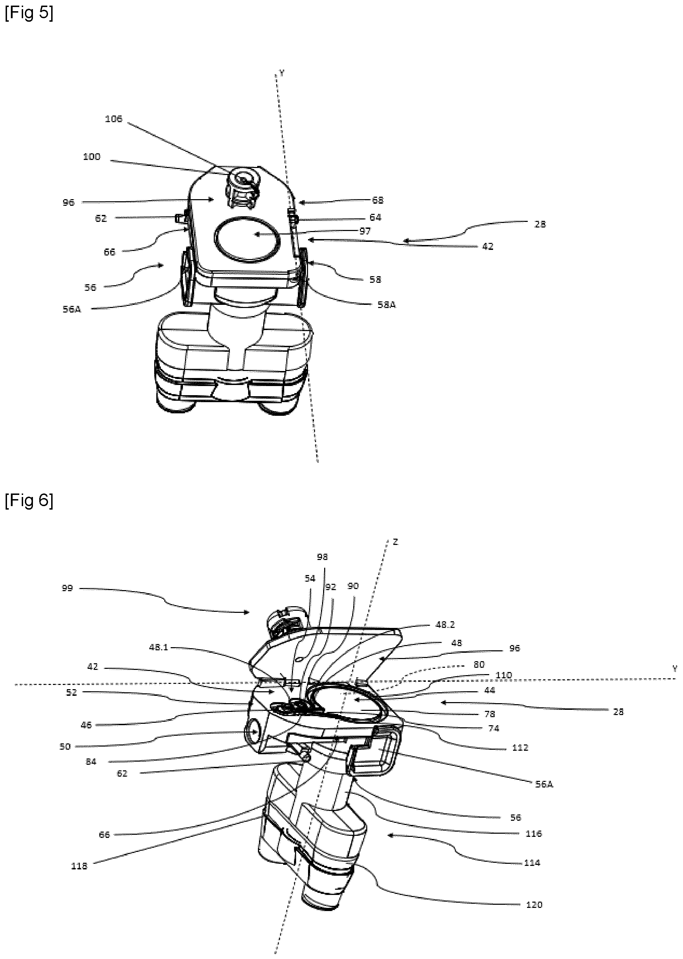

Comme visible à la figure 6, le dispositif de moussage 28 comprend un élément de mélange 42 comprenant une partie de mélange 44, un orifice d'entrée d'eau chaude/vapeur 46 et un conduit d'écoulement principal 48 reliant l'orifice d'entrée d'eau chaude/vapeur 46 à la partie de mélange 44.

Le dispositif de moussage 28 et notamment l'élément de mélange 42 comprend également un organe de connexion 50 du dispositif de moussage à la sortie de distribution d'eau chaude/vapeur 20.

L'organe de connexion 50 débouche sur une face 52 arrière du dispositif de moussage 28 et notamment de l'élément de mélange 42.

Lors du positionnement du dispositif de moussage 28 dans le logement de réception 26, l'organe de connexion 50 est propre à être connecté à la sortie de distribution d'eau chaude/vapeur 20 de sorte à être alimenté en eau chaude/vapeur.

L'orifice d'entrée d'eau chaude/vapeur 46 est relié fluidiquement à l'organe de connexion 50 de manière à recevoir de l'eau chaude/vapeur délivrée par la sortie de distribution d'eau chaude/vapeur 20 lorsque l'organe de connexion 50 est connecté à la sortie de distribution d'eau chaude/vapeur 20.

En variante, l'orifice d'entrée d'eau chaude/vapeur 46 est propre à être connecté directement à la sortie de distribution d'eau chaude/vapeur 20 lors du positionnement du dispositif de moussage 28 dans le logement de réception 26.

De manière générale, l'orifice d'entrée d'eau chaude/vapeur 46 est propre à être relié fluidiquement à la sortie de distribution d'eau chaude/vapeur 20 lorsque le dispositif de moussage 28 est reçu dans la tête de distribution de boisson 18. Cette liaison est réversible car l'organe de connexion est propre à être connecté/déconnecté de la sortie de distribution d'eau chaude/vapeur 20.

L'élément de mélange 42 comprend une paroi supérieure 54.

Le dispositif de moussage 28 et notamment l'élément de mélange 42 comprennent deux parois latérales 56, 58.

Les parois latérales 56, 58 définissent chacune une zone de préhension 56A, 58A du dispositif de moussage 28 par un utilisateur. Un utilisateur du dispositif de moussage 28 est propre à manipuler le dispositif de moussage 28 et à la positionner dans le logement de réception 26 en le manipulant avec les doigts au niveau des zones de préhension 56A, 58A.

Les parois latérales 56, 58 sont munies chacune d'un ergot 62, 64 de maintien/positionnement du dispositif de moussage 28 dans la tête de distribution de boisson 18.

Les ergots 62, 64 sont propres à coopérer avec le corps de fermeture 34 qui forme un dispositif de maintien du dispositif de moussage 28 dans la tête de distribution de boisson 18 comme cela sera expliqué par la suite dans la description détaillée du corps de fermeture 34 et de son interaction avec le dispositif de moussage 28.

Les parois latérales 56, 58 sont également munies chacune d'un élément de guidage 66, 68 propre à coopérer avec un élément de guidage 70, 72 correspondant situé dans la tête de distribution de boisson 18.

Les éléments de guidage 66, 68 sont par exemple formés par des nervures agencées au niveau des parois latérales 56, 58.

Les éléments de guidage 70, 72 sont par exemple des rainures propres à recevoir les nervures correspondant aux éléments de guidages 66, 68 et forment une liaison glissière avec lesdites nervures.

Les éléments de guidage 70, 72 sont agencés dans une partie supérieure du logement de réception 26.

Les éléments de guidage 66, 68 sont par exemple situés devant les zones de préhension suivant une direction d'insertion du dispositif de moussage 28 dans la tête de distribution 18.

Avantageusement et comme représenté sur les figures, les éléments de guidage 66, 68 sont formés par une portion de la paroi latérale 56, 58 correspondante formant la nervure.

Les ergots 62, 64 sont avantageusement en saillie suivant l'axe longitudinal X par rapport aux éléments de guidage 66, 68 et plus généralement par rapport aux autres éléments formant les parois latérales 56, 58. En d'autres termes, ils s'étendent vers l'extérieur du dispositif de moussage 28 au-delà des éléments de guidage 66, 68 suivant l'axe longitudinal X .

Comme visible à l'aide des figures 4 et 6, la partie de mélange 44 comprend une ouverture d'entrée de liquide 74, une ouverture de sortie de liquide 76 et une chambre de mélange 78 s'étendant entre l'ouverture d'entrée de liquide 74 et l'ouverture de sortie de liquide 76.

La chambre de mélange 78 s'étend suivant un axe vertical Z.

La chambre de mélange 78 comprend une extrémité supérieure ouverte 80. L'extrémité supérieure ouverte 80 forme une ouverture d'accès à la chambre de mélange 78.

La chambre de mélange 78 débouche dans une face supérieure de la paroi supérieure 54 de l'élément de mélange 42.

La chambre de mélange 78 est de section sensiblement circulaire perpendiculairement à l'axe vertical Z.

L'ouverture d'entrée de liquide 74 débouche dans une partie supérieure de la chambre de mélange 78, et par exemple dans un point haut de la chambre de mélange 78 et l'ouverture de sortie de liquide 76 est située dans une partie inférieure de la chambre de mélange 78, et est par exemple située en un point bas de la chambre de mélange 78.

L'extrémité supérieure ouverte 80 est disposée sur une face supérieure de l'élément de mélange 42 et donc de la paroi supérieure 54.

L'ouverture de sortie de liquide 76 est disposée sur une face inférieure de l'élément de mélange 42.

Le conduit d'écoulement principal 48 est ménagé dans la face supérieure de la paroi supérieure 54 et débouche dans la chambre de mélange 78 au niveau de l'ouverture d'entrée de liquide 74.

Le conduit d'écoulement principal 48 débouche sensiblement tangentiellement dans la chambre de mélange 78 de sorte que la chambre de mélange 78 soit de type cyclonique. Ainsi le liquide débouchant dans la chambre de mélange 78 depuis le conduit d'écoulement principal 48, traverse la chambre de mélange en tourbillonnant le long des parois de la chambre de mélange 78.

Comme visible à la figure 6, le conduit d'écoulement principal 48 comporte une restriction de section 84 située par exemple dans une portion centrale du conduit d'écoulement principal 48. Le conduit d'écoulement principal 48 comprend notamment une première portion de conduit 48.1 qui est située en amont de la restriction de section 84 et qui s'étend jusqu'à la restriction de section, et une deuxième portion de conduit 48.2 qui est située en aval de la restriction de section 84 et qui s'étend depuis la restriction de section 84 et jusqu'à la chambre de mélange 78. De façon avantageuse, la première portion de conduit 48.1 présente une section de passage qui diminue en direction de la restriction de section 84 et la deuxième portion de conduit 48.2 présente une section de passage qui augmente en direction de la chambre de mélange 78.

L'orifice d'entrée d'eau chaude/vapeur 46 débouche dans la première portion de conduit 48.1 et plus particulièrement à l'opposé de la chambre de mélange 78. Le conduit d'écoulement principal 48 est ainsi configuré pour relier fluidiquement l'orifice d'entrée d'eau chaude/vapeur 46 à la chambre de mélange 78, et pour permettre un écoulement d'eau chaude/vapeur dans le conduit d'écoulement principal 48 et jusqu'à la chambre de mélange 78.

Le dispositif de moussage 28 comprend un conduit d'amenée de lait 90 relié au conduit d'écoulement principal 48. Le conduit d'amenée de lait 90 s'étend entre le conduit d'écoulement principal 48 et l'entrée d'alimentation 29 en lait lorsque le dispositif de moussage 28 est positionné dans le logement de réception 26.

Le conduit d'amenée de lait 90 est propre à être connecté fluidiquement à un réservoir de lait déporté distinct du dispositif de moussage de lait 28.

Le conduit d'amenée de lait 90 est relié fluidiquement au conduit d'écoulement principal 48, et donc configuré pour être relié fluidiquement à la chambre de mélange 78 via le conduit d'écoulement principal 48. Selon le mode de réalisation représenté sur les figures, l'élément de mélange 42 comporte le conduit d'amenée de lait 90, et plus particulièrement l'élément de mélange et le conduit d'amenée de lait 90 sont réalisés d'un seul tenant.

Le conduit d'amenée de lait 90 comprend une portion sensiblement verticale qui s'étend, de préférence depuis le voisinage d'une face inférieure de l'élément de mélange 42, et débouche dans le conduit d'écoulement principal 48 au niveau de la restriction de section 84. Une extrémité inférieure de la portion verticale est propre à être connectée fluidiquement à l'entrée d'alimentation en lait 29 lorsque le dispositif de moussage 28 est positionné dans le logement de réception 26.

Sur les figures seule la partie du conduit d'amenée de lait 90 qui débouche dans le conduit d'écoulement principal 48 est visible.

Le dispositif de moussage 28 comprend également un canal d'admission d'air 92 dans le conduit d'écoulement principal 48. Selon le mode de réalisation représenté l'élément de mélange 42 comporte le canal d'admission d'air 92.

Avantageusement, le canal d'admission d'air 92 est ménagé dans la face supérieure de la paroi supérieure 54 de l'élément de mélange 42.

Le canal d'admission d'air 92 débouche dans le conduit d'écoulement principal 48 au niveau de la restriction de section 84. Le canal d'admission d'air 92 est ainsi configuré pour être relié fluidiquement à la chambre de mélange 78 via le conduit d'écoulement principal 48.

La restriction de section 84, décrite préalablement, induit une augmentation de la vitesse de la vapeur s'écoulant dans le conduit d'écoulement principal 48, ce qui génère une dépression dans le conduit d'amenée de lait 90 et dans le canal d'admission d'air 92. La restriction de section 84 est donc plus particulièrement configurée pour former un système d'aspiration de lait et d'air basé sur l'effet venturi. Le conduit d'écoulement principal 48 est ainsi configuré de telle sorte qu'un écoulement d'eau chaude/vapeur dans le conduit d'écoulement principal 48 depuis l'orifice d'entrée d'eau chaude/vapeur 46 et jusqu'à la chambre de mélange 78 génère une dépression dans le conduit d'amenée de lait 90 et une dépression dans le canal d'admission d'air 92 et entraîne par conséquent une aspiration de lait et d'air dans le conduit d'écoulement principal 48 et un écoulement du lait et de l'air aspirés jusqu'à la chambre de mélange 78.

De plus, la deuxième portion de conduit 48.2, qui présente une section de passage qui augmente en direction de la chambre de mélange 78, favorise un premier mélange de la vapeur, du lait et de l'air provenant respectivement de l'orifice d'entrée d'eau chaude/vapeur 46, du conduit d'amenée de lait 90 et du canal d'admission d'air 92, avant leur arrivée dans la chambre de mélange 78.

En outre, de par le positionnement du conduit d'écoulement principal 48 par rapport à la chambre de mélange 78, le premier mélange de vapeur, de lait et de l'air subit un mouvement cyclonique lors de son arrivée de la chambre de mélange et tourbillonne le long des parois de la chambre de mélange 78 ce qui favorise encore le mélange et l'obtention d'une mousse de lait de consistance optimale. Ainsi, la chambre de mélange 78 permet l'homogénéisation du premier mélange précité et permet de finaliser le mélange qui a commencé dans la deuxième portion de conduit 48.2.

Le conduit d'écoulement principal 48, de même que l'orifice d'entrée d'eau chaude/vapeur 46, de même que le canal d'admission d'air 92 et la chambre de mélange 78 comprennent avantageusement une extrémité supérieure ouverte. En d'autres termes, ils forment des canaux de circulation de liquide ouverts sur l'extérieur dans leur partie haute.

Le dispositif de moussage 28 comprend une partie de fermeture 96 mobile par rapport à l'élément de mélange 42 entre une position de fermeture dans laquelle la partie de fermeture 96 ferme la partie de mélange 44 et le conduit d'écoulement principal 48 et une position d'ouverture dans laquelle la partie de mélange 44 et le conduit d'écoulement principal 48 sont ouverts et accessibles pour autoriser un nettoyage de la partie de mélange 44 et du conduit d'écoulement principal 48.

Dans la position de fermeture, la partie de fermeture 96 ferme notamment, l'extrémité supérieure ouverte de l'orifice d'entrée d'eau chaude/vapeur 46, du conduit d'écoulement principal 48 et de la chambre de mélange 78.

Avantageusement, dans la position de fermeture, la partie de fermeture 96 ferme également au moins partiellement le canal d'admission d'air 92 et notamment l'extrémité supérieure ouverte du canal d'admission d'air.

Avantageusement, le conduit d'écoulement principal 48 s'étend selon un plan sensiblement horizontal et comprend sur au moins 50% de sa longueur, de préférence sur au moins 70% de sa longueur une ouverture supérieure également appelée extrémité supérieure ouverte, propre à être fermée lorsque la partie de fermeture 96 est en position de fermeture.

La partie de fermeture 96 est configurée pour recouvrir la face supérieure de la paroi supérieure 54 de l'élément de mélange 42. La partie de fermeture 96 forme un couvercle sensiblement plan propre à recouvrir la face supérieure de la paroi supérieure 54 et notamment la partie de mélange 44 et le conduit d'écoulement principal 48.

La partie de fermeture 96 est configurée pour être articulée avec l'élément de mélange 42 via une charnière définissant un axe Y de rotation sensiblement horizontal. L'axe de rotation Y est avantageusement perpendiculaire à l'axe longitudinal X lorsque le dispositif de moussage est positionné dans le logement de réception 26. En variante non représenté, l'axe de rotation Y est parallèle à l'axe longitudinal X.

La charnière permet de simplifier la manipulation du dispositif de moussage en assurant un maintien de la partie de fermeture 96 à l'élément de mélange 42 quelle que soit la position de la partie de fermeture. De plus la charnière permet de facilement déplacer la partie de fermeture en position ouverte ou fermée suivant si l'utilisateur souhaite nettoyer ou utiliser le dispositif de moussage.

Avantageusement, les parois latérales 56, 58 du dispositif de moussage, comprenant des parois latérales de la partie de fermeture 96 et les parois latérales de l'élément de mélange 42, forment, lorsque la partie de fermeture 96 est en position de fermeture, les éléments de guidage 66, 68. Un tel agencement permet d'assurer la fermeture du dispositif de moussage 28, c'est-à-dire de la partie de fermeture 96, lors de l'insertion du dispositif de moussage 28 dans le logement de réception 26 et de l'interaction des éléments de guidage 66, 68 avec les éléments de guidage 70, 72 correspondants. En outre, un tel agencement permet d'assurer le maintien de la partie de fermeture 96 en position de fermeture lorsque le dispositif de moussage 28 est reçu dans le logement de réception 26 puisque les éléments de guidage 70, 72 s'étendent de part et d'autre des éléments de guidage 66, 68 correspondants selon une direction sensiblement verticale et assurent que les parois latérales de la partie de fermeture 96 restent en contact/adjacentes avec les parois latérales de l'élément de mélange 42.

En d'autres termes, chaque élément de guidage 70, 72 est propre à maintenir la partie de fermeture 96 du dispositif de moussage en position de fermeture, c'est à dire en contact avec l'élément de mélange 42 lorsque le dispositif de moussage 28 est inséré dans le logement de réception 26.

En variante non représentée, le dispositif de moussage 28 comprend un système de maintien non représenté configuré pour maintenir la partie de fermeture 96 en position de fermeture. Le système de maintien est par exemple formé par un organe de verrouillage tel un clip de verrouillage solidaire de la partie de fermeture et propre à être maintenu par coopération de forme dans une rainure correspondante formée sur l'élément de mélange 42 et notamment sa paroi/face supérieure 54 lorsque la partie de fermeture est en position de fermeture. Le système de maintien est propre à être déplacé entre une position de verrouillage de la partie de fermeture 96 en position fermée et une position de déverrouillage.

La partie de fermeture 96 comprend une fenêtre de visualisation 97, visible sur la figure 5, destinée à être en regard de la partie de mélange 44 et notamment de la chambre de mélange 78 lorsque la partie de fermeture 96 est en position de fermeture.

La fenêtre de visualisation 97 est destinée à être en regard de l'extrémité supérieure ouverte 80 lorsque la partie de fermeture 96 est en position de fermeture.

La fenêtre de visualisation 97 est par exemple formée par une portion de la partie de fermeture réalisée en un matériau transparent de sorte que l'utilisateur puisse visualiser l'intérieur de la chambre de mélange 78 lorsque la partie de fermeture 96 est en position de fermeture.

La fenêtre de visualisation 97 permet à l'utilisateur de visualiser si le dispositif de moussage 28 a déjà été utilisé et s'il faut le nettoyer avant de réaliser une boisson. En effet l'utilisateur peut observer via cette fenêtre l'intérieur de la chambre de mélange 78. En outre, l'utilisateur peut vérifier le bon fonctionnement du dispositif de moussage 28 au travers de la fenêtre de visualisation en vérifiant visuellement si le lait traverse la chambre de mélange 78 et a bien un mouvement cyclonique le long des parois de la chambre 78.

La partie de fermeture 96 comprend également un conduit d'amenée d'air 98, visible sur la figure 6, propre à être relié fluidiquement au conduit d'écoulement principal 48 lorsque la partie de fermeture 96 est en position de fermeture et un dispositif de réglage de débit d'air 99 configuré pour régler un débit d'air s'écoulant dans le conduit d'amenée d'air 98 jusqu'au conduit d'écoulement principal 48. Le conduit d'amenée d'air 98 est avantageusement relié au canal d'admission d'air 92 lorsque la partie de fermeture 96 est en position de fermeture de sorte à être relié fluidiquement au conduit d'écoulement principal 48.

Le conduit d'amenée d'air 98 est par exemple un orifice traversant la partie de fermeture 96 selon l'axe vertical Z lorsque la partie de fermeture 96 est en position de fermeture.

Selon le mode de réalisation représenté sur les figures, et comme plus clairement visible à la figure 4, le dispositif de réglage de débit d'air 99 comporte une partie de support 100 fixée à la partie de fermeture 96 et faisant saillie d'une face supérieure de la partie de fermeture 96. Le dispositif de réglage de débit d'air 99 comporte également un organe de réglage de débit d'air 102, tel qu'un bouton de réglage de débit, supporté par la partie de support 100 et monté mobile, et par exemple monté mobile selon un mouvement hélicoïdal, par rapport à la partie de support 100 selon une direction de déplacement D2 qui peut par exemple être sensiblement verticale.

L'organe de réglage de débit 102 est configuré pour occuper une pluralité de positions de réglage décalées les unes des autres selon la direction de déplacement D2.

Le dispositif de réglage de débit d'air 99 comporte en outre un élément d'étanchéité 104 qui est fixé à l'organe de réglage de débit 102 et qui est configuré pour délimiter avec la partie de support 100 un passage d'écoulement d'air ayant une section de passage qui varie en fonction de la position occupée par l'organe de réglage de débit 102.

L'organe de réglage de débit 102 est plus particulièrement déplaçable entre une position de réglage maximale dans laquelle la section de passage du passage d'écoulement d'air est maximale, et une position de réglage minimale dans laquelle la section de passage du passage d'écoulement d'air est minimale, et par exemple nulle ou sensiblement nulle.

Selon le mode de réalisation représenté sur les figures, la partie de support 100 comporte un trou d'insertion 106, qui peut par exemple présenter un diamètre supérieur à un millimètre et de préférence supérieur à 1,5 millimètres, orienté sensiblement parallèlement à la direction de déplacement D2, et le dispositif de réglage de débit d'air 99 comporte un organe de restriction de passage non visible sur les figures, tel qu'une goupille ou un pointeau de forme globalement cylindrique, ayant une portion d'extrémité inférieure qui est logée dans le trou d'insertion 106. L'organe de restriction de passage est solidaire en mouvement de l'organe de réglage de débit 102, et est donc monté mobile dans le trou d'insertion 106 selon la direction de déplacement D2. Le trou d'insertion 106 et l'organe de restriction de passage délimitent plus particulièrement un passage d'air calibré relié fluidiquement au conduit d'amenée d'air 98.

Le dispositif de réglage de débit d'air 99 permet de régler le débit d'air injecté dans le conduit d'écoulement principal 48 et donc la taille des bulles d'air contenues dans la mousse de lait en sortie du dispositif de moussage 28. En faisant évoluer la taille des bulles d'air on fait évoluer le volume de mousse de lait.

Selon une variante de réalisation de l'invention, l'élément de mélange 42 pourrait être dépourvue du canal d'admission d'air 92, et le conduit d'amenée d'air 98 pourrait être relié directement au conduit d'écoulement principal 48 lorsque la partie de fermeture 96 est en position de fermeture.

Le dispositif de moussage de lait 28 comprend un joint d'étanchéité 110, visible à la figure 6, agencé à une zone de jonction entre l'élément de mélange 42 et la partie de fermeture 96. Le joint d'étanchéité 110 s'étend sur la périphérie de la partie de mélange 44 et du conduit d'écoulement principal 48.

La partie de fermeture 96 est propre à assurer un appui sur le joint d'étanchéité 110 lorsque la partie de fermeture 96 est en position de fermeture.

Comme montré plus particulièrement sur la figure 6, le joint d'étanchéité 110 s'étend autour de la chambre de mélange 78 et notamment de l'extrémité supérieure ouverte 80, du conduit d'écoulement principal 48, du canal d'admission d'air 92 et de l'orifice d'entrée d'eau chaude/vapeur 46. A cet effet, l'élément de mélange 42 comporte une rainure de réception 112 ménagée dans la face supérieure de la paroi supérieure 54 dans laquelle est logé le joint d'étanchéité 110.

Selon le mode de réalisation représenté sur les figures, le joint d'étanchéité 110 comporte un corps de joint logé intégralement dans la rainure de réception 112, et une lèvre d'étanchéité s'étendant le long du corps de joint et faisant saillie hors de la rainure de réception 112. De façon avantageuse, le joint d'étanchéité 110 est continu et peut par exemple présenter une section constante.

La partie de fermeture 96 permet avec le joint d'étanchéité 110 d'assurer une étanchéité au niveau de la paroi supérieure 54, du conduit d'écoulement principal 48, de même que de l'orifice d'entrée d'eau chaude/vapeur 46, du canal d'admission d'air 92 et de la chambre de mélange 78. Une performance optimisée du dispositif de moussage 28 est ainsi garantie.

Le dispositif de moussage de lait 28 comprend également un élément de distribution de lait moussé 114 propre à être connecté de manière réversible à l'élément de mélange 42.

L'élément de distribution de lait moussé 114 comprend avantageusement un canal d'entrée 116 et deux canaux de sortie 118, 120 de lait moussé.

L'élément de distribution de lait moussé 114 et notamment le canal d'entrée 116 est propre à être relié fluidiquement à l'ouverture de sortie de liquide 76 lorsqu'il est connecté à l'élément de mélange 42.

L'élément de distribution de lait moussé 114 est propre à délivrer le lait moussé dans deux tasses simultanément via les deux canaux de sortie 118, 120.

Dans le mode de réalisation représenté, le corps de fermeture 34 forme un dispositif de maintien du dispositif de moussage 28 dans le logement de réception 26.

Le dispositif de maintien prend la forme d'un levier de maintien 130 mobile entre la position ouverte d'accès au logement de réception et la position fermée dans laquelle le levier de maintien 130 est propre à coopérer avec le dispositif de moussage de lait 28 pour le maintenir dans le logement de réception 26.

Lorsque le levier de maintien 130 est en position ouverte un utilisateur peut accéder au logement 26 et notamment au dispositif de moussage 28 pour le retirer du logement 26 et effectuer par exemple une opération de nettoyage du dispositif de moussage.

Lorsque le levier de maintien 130 est en position fermée et que le dispositif de moussage 28 est reçu dans le logement 26, le levier de maintien 130 est propre à coopérer avec le dispositif de moussage de lait 28 pour le maintenir dans le logement de réception 26.

Le levier de maintien 130 est monté pivotant par rapport au logement de réception selon l'axe longitudinal X.

Comme visible sur les figures, la position ouverte du levier de maintien 130 correspond à une position haute et la position fermée à une position basse.

Le levier de maintien 130 comprend notamment des saillies axiales 132, 134 propres à venir en appui contre le dispositif de moussage 28, lors du déplacement du levier de maintien 130 de la position ouverte à la position fermée alors que le dispositif de moussage 28 est positionné dans le logement de réception 26.

Les saillies axiales 132, 134 s'étendent depuis une face inférieure de la paroi supérieure 40.

Les saillies axiales 132, 134 s'étendent dans un plan sensiblement vertical.

Chaque saillie axiale 132, 134 est propre lorsque le dispositif de moussage 28 est mal positionné dans le logement de réception 26, à coopérer avec un ergot 62, 64 correspondant pour empêcher le déplacement du levier de maintien en position fermée. Les ergots 62, 64 forment des éléments de détrompage permettant de garantir un bon positionnement du dispositif de moussage 28 dans le logement de réception 26.

Avantageusement, chaque saillie axiale 132, 134, comprend un relief, par exemple en forme de crochet, propre à coopérer avec l'ergot 62, 64 correspondant.

En effet, dans le cas où le dispositif de moussage 28 est mal positionné et notamment pas complètement inséré dans le logement de réception 26 suivant la direction d'insertion, les ergots sont propres à coopérer avec les saillies axiales et avantageusement les reliefs, de sorte à empêcher un déplacement du levier de maintien 130 dans la position fermée. Ainsi, l'utilisateur réalise que le dispositif de moussage 28 n'est pas complètement inséré dans le logement de réception 26 et peut corriger son positionnement.

Avantageusement, chaque saillie axiale 132, 134 et avantageusement encore chaque relief est propre à coopérer avec l'ergot 62, 64 correspondant lorsque le dispositif de moussage 28 est correctement positionné dans le logement de réception 26 et que le levier de maintien 130 est déplacé dans la position fermée. Plus précisément, chaque relief est propre à appliquer un effort axial sur l'ergot 62, 64 correspondant lorsque le dispositif de moussage 28 est correctement positionné dans le logement de réception 26 et que le levier de maintien 130 est déplacé dans la position fermée.

L'effort axial est exercé selon la direction d'insertion du dispositif de moussage 28 dans le logement de réception 26 afin de garantir le bon positionnement du dispositif de moussage 28 dans la tête de distribution de boisson 18 et d'assurer la connexion de l'organe de connexion 50 à la sortie de distribution d'eau chaude/vapeur 20.

Les saillies axiales 132, 134 permettent de garantir via l'effort axial que l'organe de connexion 50 coopère avec la sortie de distribution d'eau chaude/vapeur 20 et que le conduit d'amenée de lait 90 est connecté à l'entrée d'alimentation 29 en lait de sorte que le bon fonctionnement du dispositif de moussage 28 est assuré.

Les saillies axiales 132, 134 sont agencées de part et d'autre d'un axe central de la tête de distribution de boisson 18. L'axe central est un axe vertical.

En variante le levier de maintien 130 comprend une seule saillie axiale.

Le levier de maintien 130 comprend également une face avant munie d'une zone de préhension 135 par l'utilisateur pour manipuler le levier de maintien 130 entre ses positions ouverte et fermée.

Avantageusement, la tête de distribution de boisson 18 comprend une façade supérieure munie d'un orifice de passage 136 de l'organe de réglage du débit d'air 102. Avantageusement l'orifice de passage 136 est formée au travers de la paroi supérieure 38 du corps principal 30.

Avantageusement, la tête de distribution de boisson 18 comprend une façade supérieure, telle que la paroi supérieure 40, munie d'une zone de visualisation 138 d'une partie de mélange 44 du dispositif de moussage 28. La zone de visualisation 138 est par exemple formée par un orifice ménagé au travers de la paroi supérieure 40 du corps de fermeture 34. En variante, la zone de visualisation 138 est une zone transparente ménagée dans la paroi supérieure 40.

La zone de visualisation 138 est agencée pour être en regard de la fenêtre de visualisation 97 lorsque le levier de maintien 130 et/ou le corps de fermeture 34 est en position fermée et que le dispositif de moussage 28 est reçu dans le logement de réception 26. La zone de visualisation 138 permet de visualiser la chambre de mélange 78 au travers de la fenêtre de visualisation 97. Ainsi, l'utilisateur est propre à observer la chambre de mélange 78 et le lait moussé circulant au travers de la chambre de moussage. Cela permet à l'utilisateur de vérifier visuellement s'il est nécessaire de nettoyer le dispositif de moussage 28, ainsi que le bon fonctionnement du dispositif de moussage 28 en vérifiant le mouvement cyclonique du lait ainsi qu'avantageusement la texture du lait.

Le corps de fermeture 34 forme également un dispositif d'appui sur la partie de fermeture 96 du dispositif de moussage 28.

Le dispositif d'appui est propre lorsque le dispositif de moussage 28 est positionné dans le logement de réception 26, à exercer un effort d'appui sur la partie de fermeture 96 pour assurer une étanchéité entre l'élément de mélange 42 et la partie de fermeture 96.

Le dispositif d'appui permet également de maintenir une distance constante entre la partie de fermeture 96 et la paroi supérieure 54 lorsque la partie de fermeture 96 est en position de fermeture. Ainsi, le dimensionnel du conduit d'écoulement principal 48, de même que du canal d'admission d'air 92 lors de l'utilisation du dispositif de moussage 28 est maintenu dans le temps et les performances de moussage sont optimisées et garanties dans le temps. Le dispositif d'appui permet d'assurer un bon plaquage de la partie de fermeture 96 sur l'élément de mélange 42, pour assurer le dimensionnel du conduit 48, et du canal 92 et éviter une possible déformation de la partie de fermeture 96.

Le dispositif d'appui est formé par le levier de maintien 130 monté pivotant par rapport au logement de réception 26 et propre à être déplacé entre la position ouverte d'accès au logement de réception 26 et la position fermée dans laquelle le dispositif d'appui exerce l'effort d'appui sur la partie de fermeture 96 pour assurer un appui de la partie de fermeture 96 contre l'élément de mélange 42. Le levier de maintien 130 est notamment propre à appuyer la partie de fermeture 96 contre le joint d'étanchéité 110.

L'effort d'appui s'étend notamment selon une direction sensiblement verticale.

Le levier de maintien 130 comprend notamment une nervure supérieure 140, de préférence deux 140, 142, disposées sur la face inférieure de la paroi supérieure 40.

Les nervures 140, 142 s'étendent depuis une face inférieure de la paroi supérieure 40.

Les nervures 140, 142 sont propres à venir en appui contre le dispositif de moussage 28, lors du déplacement du levier de maintien 130 de la position ouverte à la position fermée alors que le dispositif de moussage 28 est positionné dans le logement de réception 26.

Les nervures 140, 142 sont propres à exercer l'effort d'appui sur la partie de fermeture 96 de sorte à garantir une bonne étanchéité entre l'élément de mélange 42 et la partie de fermeture 96.

Avantageusement, le levier de maintien comprend également deux nervures additionnelles 144, 146 positionnées sur une paroi intérieure d'une façade avant du levier 130. Les nervures additionnelles 144, 146 s'étendent préférentiellement suivant l'axe longitudinal X. Les nervures additionnelles 144, 146 sont propres à venir en appui contre l'élément de distribution de lait moussé 114, lors du déplacement du levier de maintien 130 de la position ouverte à la position fermée alors que le dispositif de moussage 28 est positionné dans le logement de réception 26.

En variante, le corps de fermeture est un capot avant d'habillage de la tête de distribution de boisson propre à venir fermer le logement de réception 26 notamment l'extrémité avant 32 du corps principal 30. Dans cette variante la tête de distribution de boisson 18 comprend un levier de maintien 130 articulé sur le corps principal 30 et distinct du corps de fermeture. Le levier de maintien 130 est mobile entre la position ouverte d'accès au logement de réception et la position fermée dans laquelle il vient fermer partiellement le logement de réception. Dans cette variante le levier de maintien est positionné entre le corps principal 30 et le corps de fermeture et a des caractéristiques globalement similaire au mode de réalisation représenté sur les figures mise à part qu'il n'a pas de rôle de capot d'habillage de la tête de distribution 18.

En variante, la partie de fermeture 96 comprend une première portion sensiblement horizontale formant un couvercle propre à fermer l'ouverture d'accès 80 et le conduit d'écoulement principal 48 lorsque la partie de fermeture est en position de fermeture, et une portion sensiblement verticale formant avec l'élément de mélange 42, lorsque la partie de fermeture 96 est en position de fermeture, la chambre de mélange 78 et avantageusement l'élément de distribution de lait moussé 114.

Les nervures additionnelles 144, 146 sont propres à exercer un effort d'appui respectivement contre la chambre de mélange 78 et l'élément de distribution de lait moussé 114. L'effort d'appui s'exerce suivant une direction sensiblement horizontale. Les nervures additionnelles 144, 146 sont particulièrement utiles dans la variante évoquées ci-dessus pour garantir l'étanchéité de la chambre de mélange et de l'élément de distribution de lait moussé 114.

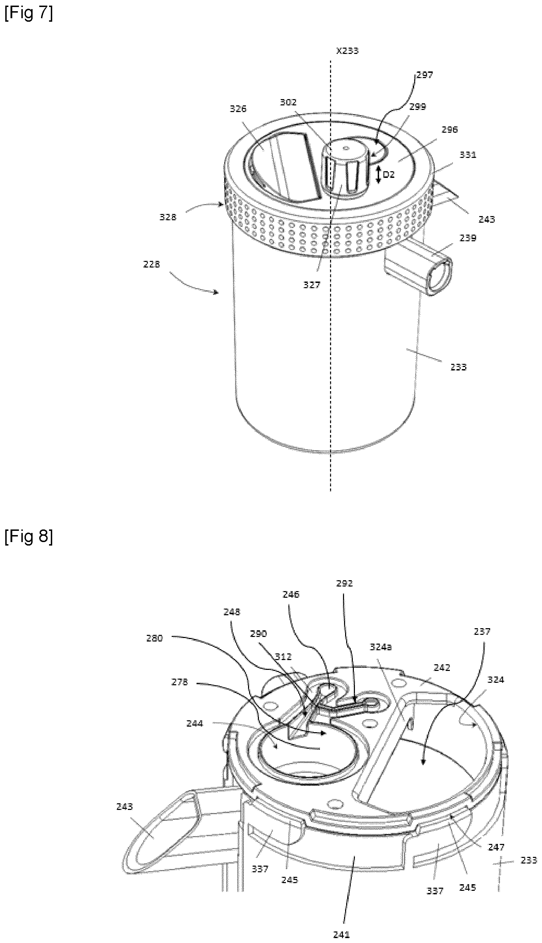

Dans le mode de réalisation des figures 7 à 8 le dispositif de moussage 228 est conforme à un deuxième mode de réalisation de l'invention.

Dans la suite de la description le dispositif de moussage 228 selon le deuxième mode de réalisation sera décrit à l'appui des figures 7 et 8 et les éléments similaires au deuxième mode de réalisation porteront la même référence que dans le premier mode de réalisation à laquelle la valeur 200 a été ajoutée. Seul les différences du deuxième mode de réalisation par rapport au premier mode de réalisation seront décrites.

Le dispositif de moussage 228 forme un pot à lait propre à être connecté à une buse eau/chaude vapeur de la machine à café.

Le dispositif de moussage 228 comprend un réservoir de lait 233 délimitant un volume interne destiné à contenir du lait et comprenant une ouverture supérieure de remplissage 237.

Le dispositif de moussage 228 comporte un embout de raccordement 239 configuré pour être raccordé à un embout non représenté de sortie d'eau chaude/vapeur de la machine à café. L'embout de sortie d'eau chaude vapeur est par exemple relié à la buse eau chaude/vapeur de la machine à café. De façon avantageuse, l'embout de raccordement 239 s'étend radialement par rapport à un axe central X233 du réservoir de lait 233.

Le dispositif de moussage 228 comprend un élément de mélange 242 comprenant une partie de mélange 244, un orifice d'entrée d'eau chaude/vapeur 246 et un conduit d'écoulement principal 248 reliant l'orifice d'entrée d'eau chaude/vapeur 246 à la partie de mélange 244.

De manière similaire au premier mode de réalisation, la partie de mélange 244 comprend une ouverture d'entrée de liquide, une ouverture de sortie de liquide et une chambre de mélange 278 s'étendant entre l'ouverture d'entrée de liquide et l'ouverture de sortie de liquide.

La chambre de mélange 278 comprend une extrémité supérieure ouverte 280.

Le dispositif de moussage 228 comprend également un conduit d'amenée de lait 290 relié au conduit d'écoulement principal 248.

L'élément de mélange comprend également un canal d'admission d'air 292.

L'élément de mélange 242 est propre à recouvrir l'ouverture supérieure de remplissage 237.

L'élément de mélange 242 comporte également une rainure de réception 312 dans laquelle est logé un joint d'étanchéité non représenté.

L'élément de mélange 242 est pourvu d'une face supérieure qui est globalement plane.

L'élément de mélange 242 est configuré pour fermer partiellement le réservoir de lait 233 et pour être amovible par rapport au réservoir de lait 233. L'élément de mélange 242 comporte par exemple une portion de montage tubulaire 241 configurée pour être montée dans le réservoir de lait 233, et plus particulièrement pour être insérée dans le réservoir de lait 233 via l'ouverture supérieure 237 du réservoir de lait 233.

L'élément de mélange 242 comporte en outre un conduit de déversement de lait 243 relié fluidiquement à l'ouverture de sortie de liquide de la chambre de mélange 278, et configuré pour permettre un déversement de lait chaud et de mousse de lait dans un récipient, tel qu'une tasse, disposée verticalement en dessous du conduit de déversement de lait 243. De façon avantageuse, le conduit de déversement de lait 243 est configuré pour s'étendre radialement par rapport à l'axe central du réservoir de lait 233.

De façon avantageuse, le dispositif de moussage de lait 228 comporte un dispositif d'immobilisation configuré pour immobiliser en rotation l'élément de mélange 242 par rapport au réservoir de lait 233 lorsque la portion de montage tubulaire 241 est reçue dans le réservoir de lait 233. Le dispositif d'immobilisation peut par exemple comporter des nervures d'immobilisation 245 prévues sur un bord périphérique supérieur du réservoir de lait 233 et réparties autour d'un axe central du réservoir de lait 233, et des rainures d'immobilisation 247 prévues sur l'élément de mélange 242 et configurées pour coopérer respectivement avec les nervures d'immobilisation 245.

Le dispositif de moussage 228 comprend une partie de fermeture 296 qui est mobile par rapport à l'élément de mélange 242 entre une position de fermeture, visible à la figure 7, dans laquelle la partie de fermeture 296 ferme la partie de mélange 244 et le conduit d'écoulement principal 248 et une position d'ouverture dans laquelle la partie de mélange 244 et le conduit d'écoulement principal 248 sont ouverts et accessibles pour autoriser leur nettoyage.

Avantageusement, dans la position de fermeture, la partie de fermeture 296 ferme également au moins partiellement le canal d'admission d'air 292.

La partie de fermeture 296 comprend une fenêtre de visualisation 297, visible sur la figure 7, destinée à être en regard de la partie de mélange 244 et notamment de l'extrémité supérieure ouverte 280 de la chambre de mélange 278 lorsque la partie de fermeture 296 est en position de fermeture.

L'élément de mélange 242 et la partie de fermeture 296 sont configurés pour fermer le réservoir de lait 233 et pour être amovibles par rapport au réservoir de lait 233. L'élément de mélange 242 et la partie de fermeture 296 forment ainsi un couvercle configuré pour fermer le réservoir de lait 233.

Selon le mode de réalisation représenté sur les figures 7 et 8, la partie de fermeture 296 comporte une ouverture de remplissage configurée pour être située en regard d'une ouverture de passage 324 prévue sur l'élément de mélange 242 et débouchant dans le réservoir de lait 233, et un volet 326 mobile, et par exemple monté pivotant, entre une position ouverte dans laquelle le volet 326 libère au moins partiellement l'ouverture de remplissage et autorise une introduction de lait dans le réservoir de lait 233 et une position fermée dans laquelle le volet 326 obture au moins partiellement l'ouverture de remplissage. L'ouverture de passage est délimitée par une découpe 324a formée au travers de l'élément de mélange 242.

Comme montré plus particulièrement sur la figure 7, la partie de fermeture 296 comporte en outre un dispositif de réglage de débit d'air 299 configuré pour régler un débit d'air s'écoulant dans le conduit d'amenée d'air et notamment dans le canal d'admission d'air 292.

Le dispositif de réglage de débit d'air 299 comporte un organe de réglage de débit 302, tel qu'un bouton de réglage de débit. L'organe de réglage de débit 302 comporte une partie de réglage et une partie de manipulation 327 solidaire de la partie de réglage et configurée pour être manipulée par un utilisateur de manière à déplacer l'organe de réglage de débit 302 selon la direction de déplacement D2.

De façon avantageuse, le dispositif de moussage de lait 228 comporte également un système de maintien 328 configuré pour maintenir la partie de fermeture 296 en position de fermeture et pour assurer une compression du joint d'étanchéité lorsque la partie de fermeture 296 est en position de fermeture. Le système de maintien 328 est plus particulièrement configuré pour plaquer la partie de fermeture 296 contre la face supérieure de l'élément de mélange 242 lorsque la partie de fermeture 296 est en position de fermeture, de manière à comprimer le joint d'étanchéité. Selon le mode de réalisation représenté sur les figures, le système de maintien 328 est également configuré pour fixer de manière amovible, c'est-à-dire de manière temporaire et réversible, l'élément de mélange 242 et la partie de fermeture 296 au réservoir de lait 233.

Le système de maintien 328 comporte une partie de verrouillage 331, tel qu'une bague de verrouillage, montée mobile en rotation par rapport à la partie de fermeture 296 autour d'un axe de rotation et entre une position de libération dans laquelle la partie de verrouillage 331 autorise un déplacement de la partie de fermeture 296 vers la position d'ouverture et une position de verrouillage dans laquelle la partie de verrouillage 331 empêche un déplacement de la partie de fermeture 296 vers la position d'ouverture. L'axe de rotation est avantageusement sensiblement parallèle à, et par exemple colinéaire avec, l'axe central X233 du réservoir de lait 233 lorsque l'élément de mélange 242 est reçu dans le réservoir de lait 233 et que la partie de fermeture 296 occupe la position de fermeture.

Lors de son déplacement de la position de libération à la position de verrouillage la partie de verrouillage entraine la partie de fermeture 296 selon un mouvement axial vertical perpendiculaire à l'axe central 233 de manière à assurer la compression du joint d'étanchéité et à maintenir la partie de fermeture 296 en position de fermeture.

Le système de maintien 328 comporte en outre une pluralité d'organes de fixation, tels que des rampes de fixation ou rainures de fixation, prévus sur la partie de verrouillage 331 et répartis autour de l'axe de rotation, et une pluralité d'éléments de fixation 337, tels que des ergots de fixation ou des encoches de fixation, prévus sur le réservoir de lait 233 et répartis autour de l'axe central du réservoir de lait 233. Les éléments de fixation 337 sont configurés pour coopérer respectivement avec les organes de fixation prévus sur la partie de verrouillage 331 lors d'une rotation de la partie de verrouillage 331 de la position de libération vers la position de verrouillage, de manière à déplacer la partie de verrouillage 331 en direction de l'élément de mélange 242. Les organes de fixation et les éléments de fixation 337 peuvent par exemple former un système de fixation par baïonnettes ou du type vis-écrou.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Dispositif de moussage de lait (28, 228) destiné à coopérer avec une machine de distribution de boisson (10), le dispositif de moussage de lait (28, 228) comportant :
- un élément de mélange (42, 242) comprenant :
+ une partie de mélange (44, 244) ;
+ un orifice d'entrée d'eau chaude/vapeur (46, 246) et un conduit d'écoulement principal (48, 248) reliant l'orifice d'entrée d'eau chaude/vapeur (46, 246) à la partie de mélange (44, 244) ;
- une partie de fermeture (96, 296) mobile par rapport à l'élément de mélange (42, 242) entre une position de fermeture dans laquelle la partie de fermeture (96, 296) ferme la partie de mélange (44, 244) et le conduit d'écoulement principal (48, 248) et une position d'ouverture dans laquelle la partie de mélange (44, 244) et le conduit d'écoulement principal (48, 248) sont ouverts et accessibles pour autoriser un nettoyage de la partie de mélange (44, 244) et du conduit d'écoulement principal (48, 248), et
- un conduit d'amenée de lait (90, 290) relié au conduit d'écoulement principal (48), **caractérisé en ce que** la partie de fermeture (96, 296) comprend au moins une fenêtre de visualisation (97, 297) destinée à être en regard de la partie de mélange (44, 244) lorsque la partie de fermeture (96 , 296) est en position de fermeture.

2. Dispositif de moussage de lait (28, 228) selon la revendication 1, **caractérisé en ce que** la partie de mélange (44, 244) comprend une ouverture d'entrée de liquide (74), une ouverture de sortie de liquide (76) et une chambre de mélange (78, 278) s'étendant entre l'ouverture d'entrée de liquide (74) et l'ouverture de sortie de liquide (76), la chambre de mélange (78, 278) comprenant une extrémité supérieure ouverte (80, 280) et la fenêtre de visualisation (97, 297) étant destinée à être en regard de l'extrémité supérieure ouverte (80, 280) lorsque la partie de fermeture (96, 296) est en position de fermeture.

3. Dispositif de moussage de lait (28, 228) selon la revendication précédente, **caractérisé en ce que** l'extrémité supérieure ouverte (80, 280) forme une ouverture d'accès à la chambre de mélange (78, 278), et **en ce que** la partie de fermeture (96, 296) ferme l'ouverture d'accès lorsque la partie de fermeture est en position de fermeture.

4. Dispositif de moussage de lait (28, 228) selon la revendication 2 ou 3, **caractérisé en ce que** la chambre de mélange (78, 278) est de section sensiblement circulaire perpendiculairement à un axe vertical, et **en ce que** le conduit d'écoulement principal (48, 248) débouche sensiblement tangentiellement dans la chambre de mélange (78, 278) de sorte que la chambre de mélange soit de type cyclonique.

5. Dispositif de moussage de lait (28, 228) selon l'une quelconque des revendications 2 à 4, **caractérisé en ce que** la chambre de mélange (78, 278) s'étend suivant un axe vertical et **en ce que** l'ouverture d'entrée de liquide (74) débouche dans une partie supérieure de la chambre de mélange (78, 278), et par exemple dans un point haut de la chambre de mélange et l'ouverture de sortie de liquide (76) est située dans une partie inférieure de la chambre de mélange (78, 278), et est par exemple située en un point bas de la chambre de mélange.

6. Dispositif de moussage de lait (28, 228) selon l'une quelconque des revendications précédentes, **caractérisé en ce que** le dispositif de moussage de lait (28, 228) comprend un joint d'étanchéité (110) agencé à une zone de jonction entre l'élément de mélange (42, 242) et la partie de fermeture (96, 296) et s'étendant sur la périphérie de la partie de mélange (44, 244) et du conduit d'écoulement principal (48, 248), la partie de fermeture (96, 296) étant propre à assurer un appui sur le joint d'étanchéité (110) lorsque la partie de fermeture (96, 296) est en position de fermeture.

7. Dispositif de moussage de lait (28, 228) selon l'une quelconque des revendications précédentes, **caractérisé en ce que** la partie de fermeture (96, 296) comprend un conduit d'amenée d'air (98) propre à être relié au conduit d'écoulement principal (48) lorsque la partie de fermeture (96, 296) est en position de fermeture, et un dispositif de réglage de débit d'air (99, 299) configuré pour régler un débit d'air s'écoulant dans le conduit d'amenée d'air.

8. Dispositif de moussage de lait (28, 228) selon l'une quelconque des revendications précédentes, **caractérisé en ce que** la partie de fermeture (96, 296) forme un couvercle sensiblement plan propre à recouvrir la partie de mélange (44, 244) et le conduit d'écoulement principal (48, 248).

9. Dispositif de moussage de lait (228) selon l'une quelconque des revendications précédentes, **caractérisé en ce que** le dispositif de moussage (228) comprend un récipient de lait (233) définissant une ouverture supérieure de remplissage (237) et **en ce que** l'élément de mélange (242) et la partie de fermeture (296) sont propres à recouvrir l'ouverture supérieure de remplissage (237).

10. Dispositif de moussage de lait (28) selon l'une quelconque des revendications 1 à 8, **caractérisé en ce que** le dispositif de moussage de lait (28) est propre à être intégré dans une tête de distribution de boisson (18) d'une machine de distribution de boisson (10) comprenant une sortie de distribution d'eau chaude/vapeur (20), l'orifice d'entrée d'eau chaude/vapeur (46) étant propre à être relié fluidiquement à la sortie de distribution d'eau chaude/vapeur (20) lorsque le dispositif de moussage (28) est reçu dans la tête de distribution de boisson (18).

11. Dispositif de moussage de lait (28) selon l'une quelconque des revendications précédentes, **caractérisé en ce que** la partie de fermeture (96) est configurée pour être articulée avec l'élément de mélange (42) via une charnière définissant un axe de rotation sensiblement horizontal.

12. Dispositif de moussage de lait (28) selon l'une quelconque des revendications précédentes, **caractérisé en ce que** la fenêtre de visualisation (97, 297) est formée par une portion de la partie de fermeture (96, 296) réalisée en un matériau transparent.

13. Machine de distribution de boisson (10) comprenant une sortie de distribution d'eau chaude/vapeur (20) et un dispositif de moussage de lait (28, 228), **caractérisée en ce que** le dispositif de moussage de lait (28, 228) est selon l'une quelconque des revendications précédentes, et **en ce que** l'orifice d'entrée d'eau chaude/vapeur (46, 246) est propre à être relié fluidiquement à la sortie de distribution d'eau chaude/vapeur (20).

14. Machine de distribution de boisson (10) selon la revendication précédente, **caractérisée en ce que** la machine de distribution de boisson (10) comprend une tête de distribution de boisson (18) comprenant la sortie de distribution d'eau chaude/vapeur (20) et un logement de réception (26) du dispositif de moussage de lait, et **en ce que** la tête de distribution de boisson (18) comprend une façade supérieure munie d'une zone de visualisation (138) de la fenêtre de visualisation (97) lorsque le dispositif de moussage de lait (28) est positionné dans le logement de réception (26).
